# EUROPÄISCHE PATENTANMELDUNG

(11) **EP 1 319 676 A1**
(43) Veröffentlichungstag der Anmeldung: **18.06.2003**
(21) Anmeldenummer: 01129799.1
(22) Anmeldetag: 14.12.2001
(51) Int. Cl.: C08F 283/06, C08G 65/48, C04B 24/24

(54) **Anionpolymere**

(71) Anmelder: Cognis Iberia, S.L., 08755 Castellbisbal, (Barcelona) (ES)
(72) Erfinder: Valls, Ramon, 08022 Barcelona (ES); Tuduri, Jaime, 08224 Terrassa (Barcelona) (ES); Pi Subirana, Rafael, 08400 Granollers (Barcelona) (ES)
(74) Vertreter: Fabry, Bernd, Dr.

(57) **Zusammenfassung**

Vorgeschlagen werden neue Anionpolymere, die dadurch erhältlich sind, dass man
(a) Maleinsäure oder deren Anhydrid mit Alkylpolyalkylenglycolen verestert,
(b) die so erhaltenen Ester mit (Meth)acrylsäure copolymerisiert, und
(c) die so erhaltenen Polymere durch Zugabe von Alkalibasen in die Salzform überführt.

## Beschreibung

### Gebiet der Erfindung

Die Erfindung befindet sich auf dem Gebiet der Polymere und betrifft neue Anionpolymere auf Basis von Maleinsäureestern, ein Verfahren zu ihrer Herstellung sowie ihre Verwendung als Hilfsstoffe bei der Verarbeitung von Zement und Beton.

### Stand der Technik

Bei der Herstellung von wässrigen Zement zubereitungen bzw. Beton besteht das Problem, die Viskosität der Masse während Herstellung, Transport und Einsatz so niedrig zu halten, dass ein problemlose Verarbeitung möglich ist, ohne dass die Mischung so dünnflüssig wird, dass sie aus der Form rinnt. Man kann dieses Gleichgewicht mit Hilfe des Wassergehaltes einstellen, in der Regel wird dazu aber eine solche Menge erforderlich sein, dass sich die Zeit zum Aushärten stark verzögert. Aus diesem Zweck werden den Zubereitungen Viskositätsregulatoren zugesetzt, die die Viskosität auch ohne Zusatz größerer Wassermengen im erforderlichen Bereich halten und gleichzeitig die offene Zeit bis zum Abbinden so weit verzögern, dass es nicht während des Transportes schon zu einem Aushärten kommt.

Aus dem Stand der Technik sind verschiedene Polymere sowie deren Verwendung als Zement- bzw. Betonverflüssigungsmittel bekannt. Gegenstand der **EP 1090901 A1** (Takemoto) ist ein Verfahren zur Herstellung von Polyetherestern mit durchschnittlichen Molgewichten im Bereich 5.000 bis 40.000, bei dem man zunächst Methoxypolyalkylenglycolether mit Methacrylsäure umsetzt und die so erhaltenen Monomeren in wässriger Lösung polymerisiert. Aus den beiden Druckschriften **US 5,614,017** und **US 5,670,578** (Arco) sind Polymere bekannt, die man durch Veresterung von Polycarbonsäuren mit Polyethern erhält. Die Reaktion verläuft in zwei Schritten, wobei man die Mischung zunächst auf 120 °C erwärmt, um Wasser zu entfernen und danach auf 170 °C erhitzt, um die eigentliche Veresterung durchzuführen. In der US 6,034,208 (Arco) wird vorgeschlagen, Hydroxy(meth)acrylate mit Alkylenoxiden umzusetzen und die so erhaltenen Addukte dann mit Acrylsäure zu polymerisieren. Gegenstand der US 5,919,300 (Sika) sind Copolymere, die durch gemeinsame Polymerisation von (a) N-Vinylamiden bzw. Lactamen, (b) Estern der Methacrylsäure mit Polyethylenglycolen und (c) Methacrylsulfonsäure erhalten werden. In der **US 5,665,158** (Grace) werden Polymere beschrieben, die durch Umsetzung von Poly(meth)acrylsäure mit alkoxylierten Aminen erhalten werden. Die Lehren der beiden Schriften **US 6,139,623** und **US** **6,172,147** (Grace) ergänzen dieses Verfahren dahin gehend, dass abschließend Entschäumer (Tributylphosphat) oder Aniontenside (Alkylethersulfat) zugesetzt werden.

Die bekannten Additive sind jedoch im Hinblick auf ihre anwendungstechnischen Eigenschaften keineswegs befriedigend. In vielen Fällen wird die Viskosität nicht hinreichend herabgesetzt, so dass die Massen beispielsweise schon während des Transportes vom Hersteller zur Baustelle zum Erstarren kommt und nur noch mit hohem technischen Aufwand verarbeitet werden kann. In anderen Fällen wird die Viskosität zwar hinreichend erniedrigt, der Effekt erweist sich jedoch als zeitabhängig, d.h. entweder kommt es zu einem völligen Zusammenbruch der Viskosität oder aber zum plötzlichen Erstarren der Masse, was beides natürlich nicht gewünscht ist.

Somit hat die Aufgabe der vorliegenden Erfindung darin bestanden, neue polymere Additive für die Herstellung von wässrigen Zementzubereitungen bzw. Beton, sogenannte "Superplasticizer" zur Verfügung zu stellen, welche frei von den eingangs geschilderten Nachteilen sind und insbesondere über bessere viskositätsregulierende Eigenschaften verfügen.

### Beschreibung der Erfindung

Gegenstand der Erfindung sind neue Anionpolymere, die dadurch erhältlich sind, dass man
(a) Maleinsäure oder deren Anhydrid mit Alkylpolyalkylenglycolen verestert,
(b) die so erhaltenen Ester mit (Meth)acrylsäure copolymerisiert, und
(c) die so erhaltenen Polymere durch Zugabe von Alkalibasen in die Salzform überführt.

Überraschenderweise wurde gefunden, dass die neuen Anionpolymere gegenüber den vergleichbaren Stoffen des Stands der Technik wässrigen Zementzubereitungen bzw. Beton ein verbessertes rheologisches Verhalten verleihen und zudem das Abbinden verzögern.

Ein weiterer Gegenstand der Erfindung betrifft ein Verfahren zur Herstellung von Anionpolymeren, bei dem man
(a) Maleinsäure oder deren Anhydrid mit Alkylpolyalkylenglycolen verestert,
(b) die so erhaltenen Ester mit (Meth)acrylsäure copolymerisiert, und
(c) die so erhaltenen Polymere durch Zugabe von Alkalibasen in die Salzform überführt.

### Veresterung

In der ersten Stufe des Verfahrens findet die Bildung von Estern der Maleinsäure mit Alkylpolyalkylenglycolen statt. Obschon natürlich Maleinsäure direkt in die Veresterung eingesetzt werden kann, hat es sich als vorteilhaft erwiesen, das preiswerte und in großen Mengen verfügbare Maleinsäureanhydrid einzusetzen. Dies hat den weiteren Vorteil, dass die Herstellung der Monoester wegen der hohen Ringspannung des MSA rasch und quantitativ abläuft und kein Reaktionswasser gebildet wird. Als Alkylpolyalkylenglycole kommen Stoffe der Formel **(I)** in Frage,

**R**^{**1**}**(OCHCHR**^{**2**}**)**_{**n**}**OH** (I)

in der R¹ für Alkylreste mit 1 bis 4 Kohlenstoffatomen, R² für Wasserstoff oder eine Methylgruppe und n für Zahlen von 1 bis 40 steht. Vorzugsweise handelt es sich dabei um Methylpolyethylenglycole. Weiterhin bevorzugt ist der Einsatz von Alkylpolyalkylenglycolen, speziell Alkylpolyethylenglycolen der Formel **(I),** die ein durchschnittliches Molekulargewicht von 200 bis 2.000 und insbesondere 500 bis 1.000 Dalton aufweisen. Zur Herstellung der Monoester empfiehlt es sich, MSA und Alkylpolyalkylenglycole im molaren Verhältnis 1 : 1 bis 1 : 1,2 einzusetzen. Die Reaktionstemperatur kann dabei 50 bis 100 und vorzugsweise etwa 80 °C betragen. Zur Herstellung der Diester sind Einsatzmengen von 1 : 2 bis 1 : 2,2 und drastischere Bedingungen, nämlich Temperaturen im Bereich von 120 bis 150 °C erforderlich. Außerdem empfiehlt es sich hier, mit vermindertem Druck zu arbeiten und das entstehende Kondensationswasser kontinuierlich aus dem Gleichgewicht zu entfernen. Obschon grundsätzlich die Herstellung von Monoestern bzw. Mischungen mit hohem Monoestergehalt angestrebt wird, stellen die Veresterungsprodukte natürlich stets Gemische dar, deren Mono/Diester-Verteilung im wesentlichen über die Stöchiometrie der Einsatzstoffe und die Reaktionsbedingungen gesteuert werden.

### Polymerisation und Neutralisation

Dementsprechend werden im zweiten Schritt Maleinsäuremono- und/oder -diester mit (Meth)acrylsäure copolymerisiert. Die Polymerisation kann in an sich bekannter Weise durchgeführt werden, d.h. in Gegenwart von Radikalstartern wie Persulfaten oder Bisulfiten. Als Comonomere kommen sowohl Acrylsäure als auch Methacrylsäure sowie beliebige Mischungen von beiden in Betracht. Nach dem Start der Reaktion wird ein starker Temperaturanstieg beobachtet, wobei man durch geeignete Maßnahmen, beispielsweise Kühlen im Eisbad darauf achtet, dass ein Wert von 110 °C nicht überschritten wird. Die Reaktion kann in organischen Lösemitteln, wie beispielsweise Glycol durchgeführt werden, vorzugsweise kommt aber ein wässriges Medium zum Einsatz. In der Regel weisen die Polymere anschließend ein mittleres Molekulargewicht im Bereich von 1.000 bis 5.000 Dalton auf. Im Anschluss an die Polymerisation werden die Polymere mit wässrigen Alkalihydroxiden, wie beispielsweise Natrium- oder Kaliumhydroxid auf einen pH-Wert im Bereich von 6 bis 8 eingestellt. Auf diese werden klare Lösungen erhalten, die einen Feststoffgehalt im Bereich von 40 bis 50 Gew.-% aufweisen.

### Gewerbliche Anwendbarkeit

Ein weiterer Gegenstand der Erfindung betrifft die Verwendung der neuen Anionpolymeren als viskositätsregulierende bzw. abbindeverzögernde Zusätze zu wässrigen Zementzubereitungen bzw. Beton, in denen sie in Mengen von 0,01 bis 1, vorzugsweise 0,1 bis 0,5 Gew.-% - bezogen auf den Feststoffgehalt der Zubereitungen - enthalten sein können.

### Beispiele

**Beispiel 1.** In einem 5-I-Dreihalskolben wurden 700 g (10 Mol) Maleinsäureanhydrid und 2240 g (10 Mol) PEG200-Methylester vorgelegt und 2 h unter Rühren auf 80 °C erwärmt. Der resultierende Maleinsäuremonoester wurde in praktisch quantitativer Ausbeute erhalten und in eine zweite Reaktionsapparatur überführt, in der er im molaren Verhältnis von 1 : 2 mit Acrylsäure vermischt wurde. Dem Reaktionsansatz wurden bei 20 °C zunächst 1.000 ml Wasser sowie als Starter 0,1 Mol Ammoniumpersulfat und 0,5 Mol Natriumbisulfit zugesetzt. Schon bald wurde ein starker Temperaturanstieg beobachtet, der bis auf einen Wert von 110 °C führte. Danach wurde die Polymerisation abgebrochen und die Mischung unter Zugabe von 50 Gew.-%iger Natriumhydroxidlösung auf pH = 6.8 eingestellt. Die Zubereitung stellte eine klare Lösung mit einem Feststoffgehalt von 42 Gew.-% dar; das durchschnittliche Molekulargewicht des Copolymeren betrug 4.000 Dalton.

**Beispiel 2.** Beispiel 1 wurde unter Einsatz von 4.880 g PEG400-Methylester wiederholt. Es wurde eine klare Lösung mit einem Feststoffgehalt von 40 Gew.-% erhalten; das durchschnittliche Molekulargewicht des Copolymeren betrug 5.000 Dalton.

**Beispiel 3.** Beispiel 1 wurde unter Einsatz von 4.480 g PEG200-Methylester wiederholt. Die Veresterung fand bei 150 °C statt, das Kondensationswasser wurde unter vermindertem Druck kontinuierlich aus dem Reaktionsgleichgewicht entfernt. Es wurde eine Mischung aus Mono- und Diester erhalten, die wie eingangs beschrieben mit Acrylsäure polymerisiert wurde. Die Endzubereitung stellte eine klare Lösung mit einem Feststoffgehalt von 44 Gew.-% dar; das durchschnittliche Molekulargewicht des Copolymeren betrug 4.200 Dalton.

**Beispiel 4**. Beispiel 1 wurde wiederholt, jedoch anstelle von Acrylsäure eine molgleiche Menge Methacrylsäure eingesetzt. Die Zubereitung stellte eine klare Lösung mit einem Feststoffgehalt von 42 Gew.-% dar; das durchschnittliche Molekulargewicht des Copolymeren betrug 4.800 Dalton.

**Beispiel 5**. Beispiel 1 wurde wiederholt, jedoch pro Mol Ester 4 Mol Acrylsäure eingesetzt. Die Zubereitung stellte eine klare Lösung mit einem Feststoffgehalt von 45 Gew.-% dar; das durchschnittliche Molekulargewicht des Copolymeren betrug 5.000 Dalton.

**Anwendungstechnische Untersuchungen.** 100 g handelsüblicher Portlandzement wurden mit Wasser im Gewichtsverhältnis 4 : 1 vermischt und 10 min intensiv gerührt, bis eine zähflüssige Masse entstand. Anschließend wurden die verschiedenen Viskositätsregulatoren zugesetzt und weitere 5 min gerührt. Die Viskosität der so erhaltenen Zubereitungen wurde nach der Brookfield-Methode in einem RVT-Viskosimeter (5 Upm, 20 °C, Spindel 1 mit Helipath) bestimmt; die Angabe erfolgt in [cps]. Eine weitere Charakterisierung erfolgte im sogenannten Zylindertest. Dazu wurde ein Aluminiumzylinder mit einer Höhe von 65 mm und einem Außendurchmesser von 90 mm bis zum Rand mit den pastenartigen Zementzubereitungen gefüllt. Anschließend wurde der Zylinder entfernt, wodurch die Masse der Schwerkraft folgend mehr oder minder schnell ihre Form verlor und verlief. Bestimmt wurde der maximale Durchmesser, den die verlaufende Masse innerhalb von 10 s nach Entfernen der Form aufwies. Dabei wird als optimal ein Durchmesser von 18 bis 22 cm angesehen, da dies eine Zubereitung charakterisiert, deren Viskosität so niedrig ist, dass sie leicht verarbeitet werden kann, jedoch hoch genug ist, um nicht sofort aus der Form zu laufen. Alle Ergebnisse sind in Tabelle 1 zusammengefasst. Die Beispiele 1 bis 3 sind erfindungsgemäß, die Beispiele V1 bis V3 dienen zum Vergleich.

**Tabelle 1**

| **Anwendungstechnische Untersuchungen (Konzentration Gew.-% bezogen auf Zementmenge)** | | | | |
|---|---|---|---|---|
| **Bsp.** | **Produkt** | **Konzentration** | **Viskosität** | **Durchmesser** |
| 1 | gemäß Bsp.1 | 0,1 | 40 | 19 |
| 2 | | 0,3 | 10 | 25 |
| 3 | | 0,5 | 5 | 28 |
| V1 | Olinor SP 10 ¹⁾ | 0,1 | 55 | 7 |
| V2 | | 0,3 | 20 | 15 |
| V3 | | 0,5 | 5 | 25 |

| | | | | |
|---|---|---|---|---|
| 1) Anionpolymer auf Melaminbasis (Cognis Iberia, S.L.) | | | | |

Man erkennt, dass die erfindungsgemäßen neuen Anionpolymere im Vergleich mit einem Handelsprodukt des Stands der Technik bei gleichen Einsatzmengen zu einer niedrigeren Viskosität der Zubereitungen führen. Gleichzeitig ist die Viskosität aber noch hoch genug, um den Pasten eine ausreichende Stabilität zu verleihen.

## Patentansprüche

1. Anionpolymere, dadurch erhältlich, dass man
(a) Maleinsäure oder deren Anhydrid mit Alkylpolyalkylenglycolen verestert,
(b) die so erhaltenen Ester mit (Meth)acrylsäure copolymerisiert, und
(c) die so erhaltenen Polymere durch Zugabe von Alkalibasen in die Salzform überführt.

2. Verfahren zur Herstellung von Anionpolymeren, bei dem man
(a) Maleinsäure oder deren Anhydrid mit Alkylpolyalkylenglycolen verestert,
(b) die so erhaltenen Ester mit (Meth)acrylsäure copolymerisiert, und
(c) die so erhaltenen Polymere durch Zugabe von Alkalibasen in die Salzform überführt.

3. Verfahren nach Anspruch 2, **dadurch gekennzeichnet, dass** man Alkylpolyalkylenglycole der Formel **(I)** einsetzt,
**R**^{**1**}**(OCHCHR**^{**2**}**)**_{**n**}**OH** (I)
in der R¹ für Alkylreste mit 1 bis 4 Kohlenstoffatomen, R² für Wasserstoff oder eine Methylgruppe und n für Zahlen von 1 bis 40 steht.

4. Verfahren nach den Ansprüchen 2 und/oder 3, **dadurch gekennzeichnet, dass** man Methylpolyethylenglycole einsetzt.

5. Verfahren nach mindestens einem der Ansprüche 2 bis 4, **dadurch gekennzeichnet, dass** man Alkylpolyalkylenglycole der Formel **(I)** einsetzt, die ein durchschnittliches Molekulargewicht von 200 bis 2.000 Dalton aufweisen.

6. Verfahren nach mindestens einem der Ansprüche 2 bis 5, **dadurch gekennzeichnet, dass** man Maleinsäuremono- und/oder -diester mit (Meth)acrylsäure copolymerisiert.

7. Verfahren nach mindestens einem der Ansprüche 2 bis 6, **dadurch gekennzeichnet, dass** man Copolymere herstellt, die ein mittleres Molekulargewicht im Bereich von 1.000 bis 5.000 Dalton aufweisen.

8. Verfahren nach mindestens einem der Ansprüche 2 bis 7, **dadurch gekennzeichnet, dass** man die Polymere mit wässrigen Alkalihydroxiden auf einen pH-Wert im Bereich von 6 bis 8 einstellt.

9. Verfahren nach mindestens einem der Ansprüche 2 bis 8, **dadurch gekennzeichnet, dass** man wässrige, neutralisierte Zubereitungen der Polymere herstellt, die einen Feststoffgehalt im Bereich von 40 bis 50 Gew.-% aufweisen.

10. Verwendung von Anionpolymeren nach Anspruch 1 als viskositätsregulierende Zusätze zu wässrigen Zementzubereitungen bzw. Beton.

11. Verwendung von Anionpolymeren nach Anspruch 1 als abbindeverzögernde Zusätze zu wässrigen Zementzubereitungen bzw. Beton.
